# EUROPEAN PATENT SPECIFICATION

(11) **EP 1 729 088 B1**
(45) Date of publication and mention of the grant of the patent: **27.04.2011**
(21) Application number: 05721333.2
(22) Date of filing: 23.03.2005
(51) Int. Cl.: G01C 21/00, G08G 1/0969, G09B 29/00, G09B 29/10

(54) **NAVIGATION DEVICE, ROUTE SEARCHING METHOD, ROUTE SEARCHING PROGRAM, AND COMPUTER-READABLE RECORDING MEDIUM**
NAVIGATIONSEINRICHTUNG, ROUTENSUCHVERFAHREN, ROUTENSUCHPROGRAMM UND COMPUTERLESBARES AUFZEICHNUNGSMEDIUM
DISPOSITIF DE NAVIGATION, PROCÉDÉ DE RECHERCHE DE ROUTE, PROGRAMME DE RECHERCHE DE ROUTE ET SUPPORT D'ENREGISTREMENT LISIBLE PAR ORDINATEUR

(30) Priority: 26.03.2004 JP 2004091502
(43) Date of publication of application: 06.12.2006
(73) Proprietor: Pioneer Corporation, Kanagawa 212-0031 (JP)
(72) Inventor: HIROSE, C., Pioneer Corp., Kawagoe-shi, Saitama 3508555 (JP)
(74) Representative: Haley, Stephen
(86) International application number: PCT/JP2005/005283
(87) International publication number: WO 2005/093373

(56) References cited:
- DE-A1- 19 544 157
- GB-A- 2 390 464
- JP-A- 7 129 888
- JP-A- 2000 193 478
- JP-A- 2001 280 988
- JP-A- 2002 357 442

## Description

### TECHNICAL FIELD

The present invention relates to a navigation apparatus, a route searching method, a route searching program, and a computer-readable recording medium.

### BACKGROUND ART

Conventionally, for a car navigation apparatus, route search in which a route from a starting point to a destination is set to guide a driver following the route is known as a basic function (see, for example, Patent Document 1 and Patent Document 2). Especially, in the technique disclosed in Patent Document 1, a map of an area near an interchange (IC) to be used on the searched route can be displayed, and an IC to be used can be selected based on conditions set by an operator.

Patent Document 1: Japanese Patent Laid-Open Publication No. 2002-310709
Patent Document 2: Japanese Patent Laid-Open Publication No. 2000-88593

### DISCLOSURE OF THE INVENTION

### PROBLEM TO BE SOLVED BY THE INVENTION

However, in the above conventional techniques disclosed in, for example, Patent Document 1, the operator has to execute some operation such as setting some conditions or specifying the IC to be used.

Moreover, in the technique disclosed in Patent Document 2, a user has to execute an operation to select the IC the user desires to use from a list of ICs. If the user does not execute the operation of selecting, a different route from the route including the IC that the user desires to use can be searched. In such a case, even when the user is heading a car for the IC that the user desires to use not on the route to be guided by the car navigation apparatus, the car navigation apparatus searches a route that leads back to an IC that is set by the apparatus.

In addition, in the technique in Patent Document 2, even if the user heads for another IC different from the IC that the user has specified, without canceling the specified IC because the user changes his/her mind for the IC to use after the user has specified one IC from the list, the apparatus repeats search for a route that leads back to the IC the user has specified.

JP2000193478A discloses a navigation system for guiding a driver wherein a next expected transit point on a planned guidance route is cancelled if the distance from the expected transit point increases for a predetermined period of time. GB2390464A discloses a car navigation device in which a user is guided along a guidance route from a start point to an en-route point (along a first route portion r1) and from the en-route point to a destination point (along a second route portion r2). To avoid inappropriate guidance switching from route r1 to route r2 due to location error and an intersection of the two route portions, switching of guidance from r1 to r2 is controlled dependent upon the distance to the en-route stop point.

### DISCLOSURE OF INVENTION

### MEANS FOR SOLVING PROBLEM

In a first aspect, the invention consists in a navigation apparatus comprising:
a guiding unit configured to guide a route to a destination;
a deviation judging unit configured to judge whether a moving object has deviated from the guided route; and
a re-searching unit configured to re-search a route to the destination when the deviation judging unit judges that the moving object has deviated from the guided route;
wherein, in response to the route being re-searched, the guiding unit is configured to guide the re-searched route,
characterised in that the navigation apparatus further comprises:
   a distance calculating unit configured to calculate a first distance and a second distance, the first distance being a distance from a deviated point to a first planned route point, the second distance being a linear distance from the deviated point to a second planned route point, when the deviation judging unit judges that the moving object has deviated from the guided route before passing the first planned route point; and
   a route judging unit configured to judge that the first planned route point is not to be passed when a first distance history in the form of a plurality of the first distances, calculated when the deviation judging unit has judged that the moving object has deviated from the guided route before the moving object reaches the first planned route point, shows that the first distance is an increasing trend and a second distance history in the form of a plurality of the second distances, calculated when the deviation judging unit has judged that the moving object has deviated from the guided route before the moving object reaches the first planned route point, shows that the second distance is a decreasing trend;
   wherein the re-searching unit is configured to re-search a route passing the second planned route point without passing the first planned route point when the route judging unit judges that the first planned route point is not to be passed.

In a second aspect, the invention consists in a route searching method comprising the steps of:
guiding a route to a destination;
judging whether a moving object has deviated from the guided route; and
re-searching a route to the destination when it is judged that the moving object has deviated from the guided route;
characterized by further comprising the steps of:
calculating a first distance and a second distance, the first distance being a distance from a deviated point to a first planned route point, the second distance being a linear distance from the deviated point to a second planned route point, when the deviation judging step judges that the moving object has deviated from the guided route before passing the first planned route point; and
judging that the first planned route point is not to be passed when a first distance history in the form of a plurality of the first distances, calculated when the deviation judging step has judged that the moving object has deviated from the guided route before the moving object reaches the first planned route point, shows that the first distance is an increasing trend and a second distance history in the form of a plurality of the second distances, calculated when the deviation judging step has judged that the moving object has deviated from the guided route before the moving object reaches the first planned route point, shows that the second distance is a decreasing trend;
wherein the re-searching step re-searches a route passing the second planned route point without passing the first planned route point when it is judged that the first planned route point is not to be passed.

The invention also consists in a computer-readable recording medium that stores a route searching program making a computer perform the method of the second aspect.

### BRIEF DESCRIPTION OF DRAWINGS

[Fig. 1] Fig. 1 is a block diagram showing an example of a functional configuration of a navigation apparatus according to an embodiment of the present invention;
[Fig. 2] Fig. 2 is a flowchart showing an example of a procedure of processes in a route searching method ;
[Fig. 3] Fig. 3 is a block diagram showing an example of a hardware configuration of the navigation apparatus according to an example of the present invention;
[Fig. 4] Fig. 4 is a flowchart (Part 1) showing a procedure of processes by a navigation apparatus ;
[Fig. 5] Fig. 5 is a flowchart (Part 2) showing a procedure of the processes by a navigation apparatus ;
[Fig. 6] Fig. 6 is an explanatory view showing an example of a display screen of the navigation apparatus according to an example of the present invention;
[Fig. 7] Fig. 7 is an explanatory view showing another example of the display screen of the navigation apparatus according to an example of the present invention;
[Fig. 8] Fig. 8 is an explanatory view showing another example of the display screen of the navigation apparatus according to an example of the present invention;
[Fig. 9] Fig. 9 is an explanatory view showing another example of the display screen of the navigation apparatus according to an example of the present invention;
[Fig. 10] Fig. 10 is an explanatory view showing a schematic of routes in an example of the present invention; and
[Fig. 11] Fig. 11 is an explanatory view showing a relation of deviated points with points on a scheduled route in the embodiment of the present invention.

### EXPLANATIONS OF LETTERS OR NUMERALS

- 101: Deviation judging unit
- 102: Distance calculating unit
- 103: Route judging unit
- 104: Re-searching unit
- 105: Presenting unit
- 106: Acquiring unit
- 300: Navigation control unit
- 301: User operation unit
- 302: Display unit
- 303: Location recognizing unit
- 304: Recording medium
- 305: Recording-medium decoding unit
- 306: Guiding-sound output unit
- 307: Point searching unit
- 308: Route searching unit
- 309: Route leading unit
- 310: Guiding-sound creating unit
- 311: Speaker
- 600: Display screen
- 601, 701, 801, 901: Pop-up screen

### BEST MODE(S) FOR CARRYING OUT THE INVENTION

Exemplary embodiments of a navigation apparatus, a route searching method, a route searching program, and a computer-readable recording medium will be explained in detail below with reference to the accompanying drawings.

### (Functional Configuration of Navigation Apparatus)

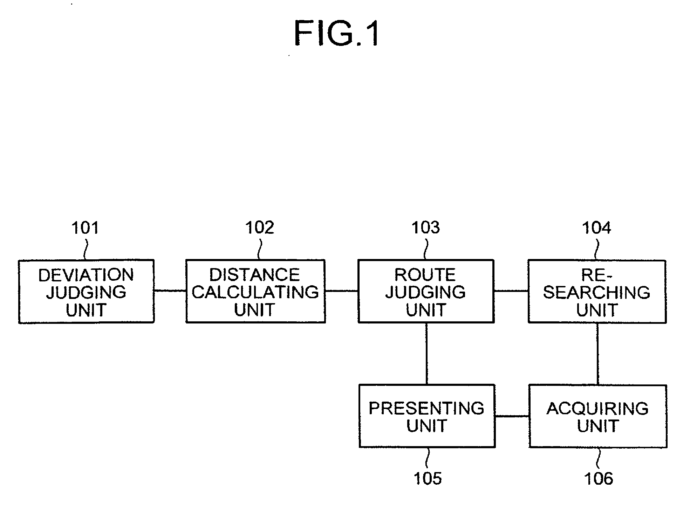

A navigation apparatus according to an embodiment of the present invention will be explained first. Fig. 1 is a block diagram showing an example of a functional configuration of the navigation apparatus according to an embodiment of the present invention.

As shown in Fig. 1, the navigation apparatus installed in a vehicle (including a four-wheel car and a two-wheel car) is configured to include a deviation judging unit 101, a distance calculating unit 102, a route judging unit 103, a re-searching unit 104, a presenting unit 105, and an acquiring unit 106.

The deviation judging unit 101 judges whether a moving object has deviated from a guided route to the destination. Specifically, the deviation judging unit 101 judges whether the moving object is present on the route based on, for example, location information of the moving object and route information indicating the guided route. The moving object includes both of the vehicle in which the navigation apparatus is installed and a user carrying the navigation apparatus (for example, a mobile phone).

The distance calculating unit 102 calculates a distance from a deviated point to a planned route point when the deviation judging unit 101 judges that the moving object has deviated from the guided route before passing through the planned route point present on the guided route. A "deviated point" may be either a location on the route just before the moving object has started to deviate, or a location of the moving object at the time when it is judged that the moving object has deviated. Because the deviation is detected when the moving object is located at a point deviated from the route, a point at which deviation is detected and the point at which the deviation starts on the route are different.
The point on the route just before the moving object has started to deviate is used when the distance on the route is to be calculated.

The distance from the deviated point to the planned route point may be, for example, a linear distance from the deviated point to the planned route point, a distance along the guided route from the deviated point to the point to be routed, or both of the linear distance and the distance on the route. In the flowchart described later, a route is determined by calculating both of the linear distance and the distance along the route to determine whether the linear distance and the distance along the route are within a predetermined distance, and, when both of the distances are within the predetermined distance, by determining whether the distance along the route is the increasing trend. However, only either one or both of the distances may be used.

The route judging unit 103 judges whether the planned route point should be passed through based on a history of distance calculated by the distance calculating unit 102. In practice, the history of distance includes a distance calculated this time and distances that have been obtained in past calculation from previous calculation to calculation executed predetermined times before the previous calculation, and that are stored in a recording unit (for example, a hard disk, etc.) described later.

When the distance from the deviated point to the planned route point is larger than a predetermined value, the route judging unit 103 may judge that the planned route point is to be passed.

The re-searching unit 104 re-searches a guiding route based on a result of judgment by the route judging unit 103.

When the route judging unit 103 has judged that a planned route point is not to be passed, the presenting unit 105 presents accordingly. This presentation informs a user of this by, for example, displaying on a display screen or outputting as sound.

The presenting unit 105 may present confirmation of whether to pass the planned route point when the route judging unit 103 has judged that the planned route point is not to be passed. The acquiring unit 106 acquires instruction information in response to the confirmation presented by the presenting unit 105. At this time, the re-searching unit 104 re-searches a guiding route based on the instruction information acquired by the acquiring unit 106. Thus, whether the planned route point is to be passed is confirmed by the user and the re-searching unit 104 can re-search a route according to the instruction.

According to the embodiment of the invention, in the case where a first planned route point to be guided first and a second planned route point to be guided following the first planned route point are present on a guided route, the distance calculating unit 102 calculates a first distance that is a distance from the deviated point to the first planned route point, and a second distance that is a linear distance from the deviated point to the second planned route point, when the deviation judging unit 101 has judged that the moving object has deviated from the guided route before the moving object passes through the first planned route point. Then, the route judging unit 103 judges whether the first planned route point is to be passed, based on a history of the first distance and a history of the second distance calculated by the distance calculating unit 102. In this case, although the first distance may be either the distance along the route or the linear distance, the second distance must be only the linear distance.

When the first distance is the increasing trend and the second distance is the decreasing trend, the route judging unit 103 judges that the first planned route point is not to be passed. The re-searching unit 104 may re-search a guiding route that does not pass the first planned route point and passes the second planned route point. In this manner, a route is re-searched determining that the moving object is heading for the second planned route point, based on a fact that the moving object is getting away from the first planned route point and is approaching to the second planned route point.

Moreover, in an example that is not an embodiment of the invention, when a plurality of planned route points are present, the distance calculating unit 102 may be configured to calculate the distance from a deviated point to a planned route point to be guided first. Furthermore, the re-searching unit 104 may be configured to re-search a guiding route that passes a planned route point to be guided next, when the route judging unit 103 has judged that the planned route point to be guided first is not to be passed.

### (Procedure of Processes in Route Searching Method)

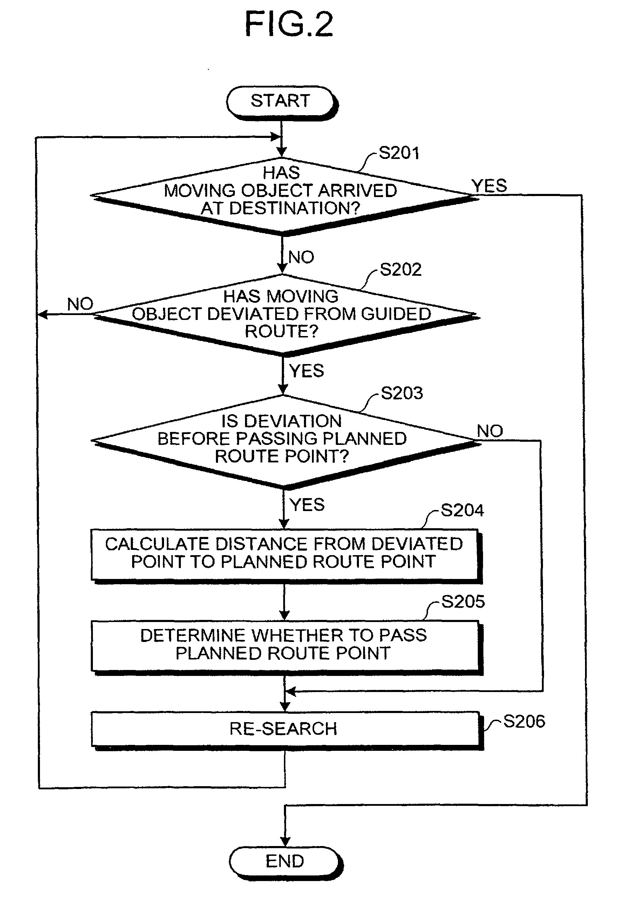

An example of a procedure of processes in a route searching method will be explained next. Fig. 2 is a flowchart showing an example of a procedure of processes in a route searching method

As shown in the flowchart of Fig. 2, whether a moving object has arrived at the destination is determined (step S201). When the moving object has not arrived at the destination (step S201: NO), whether the moving object has deviated from a guided route to the destination is determined (step S202). When the moving object has not deviated from the guided route (step S202: NO), the procedure returns to step S201.

On the other hand, when the moving object is determined to have deviated from the guided route at step S202 (step S202: YES), whether the moving object has deviated from the guided route before passing through a planned route point that is present on the guided route is determined (step S203). When the moving object has deviated from the guided route after passing through the planned route point (step S203: NO), the procedure proceeds to step S206. When the moving object has deviated from the guided route before passing through the planned route point (step S203: YES), the distance from the deviated point to the planned route point is calculated (step S204).

Then, whether the planned route point is to be passed is determined based on the history of distance calculated at step S204 (step S205), and the procedure proceeds to step S206. A guided route is re-searched at step S206 based on a result of judgment at step S205, and the procedure returns to step S201. When the moving object is determined to have arrived at the destination at step S201 (step S201: YES), the series of processes are ended.

### EXAMPLE

### (Hardware Configuration)

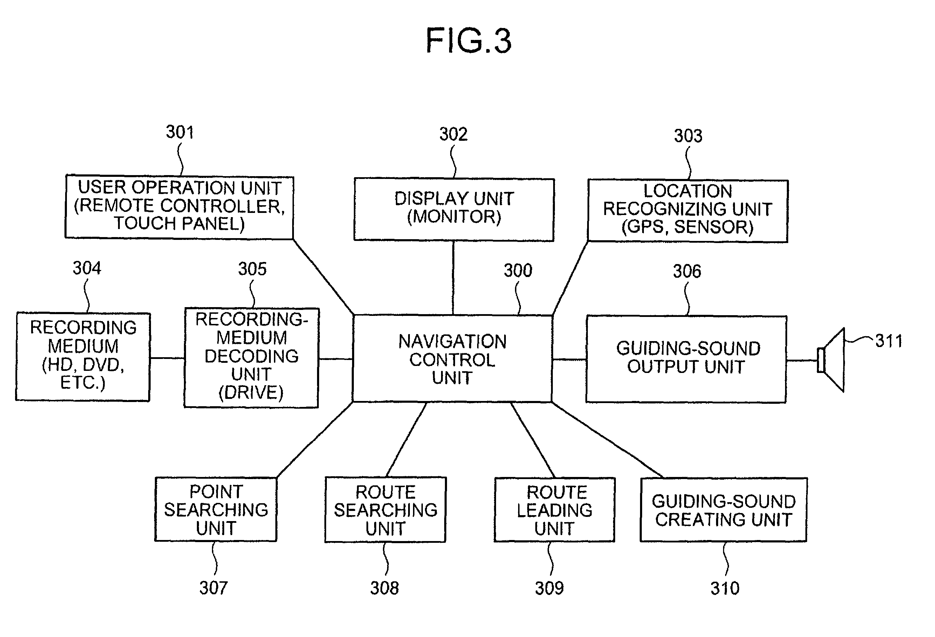

A hardware configuration of the navigation apparatus according to an example of the present invention will be explained next. Fig. 3 is a block diagram showing an example of the hardware configuration of the navigation apparatus according to an example of the present invention.

As shown in Fig. 3, the navigation apparatus is configured to include a navigation control unit 300, a user operation unit 301, a display unit 302, a location recognizing unit 303, a recording medium 304, a recording-medium decoding unit 305, a guiding-sound output unit 306, a point searching unit 307, a route searching unit 308, a route leading unit 309, a guiding-sound creating unit 310, and a speaker 311.

The navigation control unit 300 controls the entire navigation apparatus. The user operation unit 301 includes operation buttons, a remote controller, a touch panel, etc. The display unit 302 includes a liquid crystal display, an organic EL display, etc.

The location recognizing unit 303 acquires location information of a vehicle that carries the navigation apparatus. The location information of the vehicle is information for obtaining a geometric location against a GPS satellite by receiving a radio wave from the GPS satellite, and the location can be measured anywhere on the earth. The measurement is executed using an L1 radio wave being a carrier at 1.575.42 MHz including a C/A (Coarse and Access) code and a navigation message as the radio wave. Thus, the current location (the latitude and the longitude) of the vehicle is detected. Furthermore, information collected by various sensors such as a car speed sensor, a gyro sensor, etc., may be added.

The recording medium 304 is, for example, a hard disk (HD). Instead of the HD, or, in addition to the HD, a removable recording medium such as a DVD, a compact disc (CD), etc may be used. The recording-medium decoding unit 305 controls reading/writing from/to the HD, the DVD, or the CD.

The navigation control unit 300 outputs, to the display unit 302, where on a map the moving object is running, based on the location information of the vehicle calculated by the location recognizing unit 303 and map DB information obtained from the recording medium 304 through the recording-medium decoding unit 305.

The guiding-sound output unit 306 reproduces guiding sound by controlling an output to one or more speakers 311 connected.

The point searching unit 307 searches an arbitrary point based on information input from the user operation unit 301, and outputs the point to the display unit 302. The route searching unit 308 calculates the optimal route to the retrieved point based on information on the point obtained by the point searching unit 307. The route leading unit 309 creates real-time route leading information based on the information obtained by the route searching unit 308 and the location information of the moving object.

The guiding-sound creating unit 310 creates a tone and sound data corresponding to a pattern. That is, the guiding-sound creating unit 310 creates sound guidance information corresponding to a guiding point based on the route information, and outputs the sound guidance information to the guiding-sound output unit 306.

### (Procedure of Processes by Navigation Apparatus)

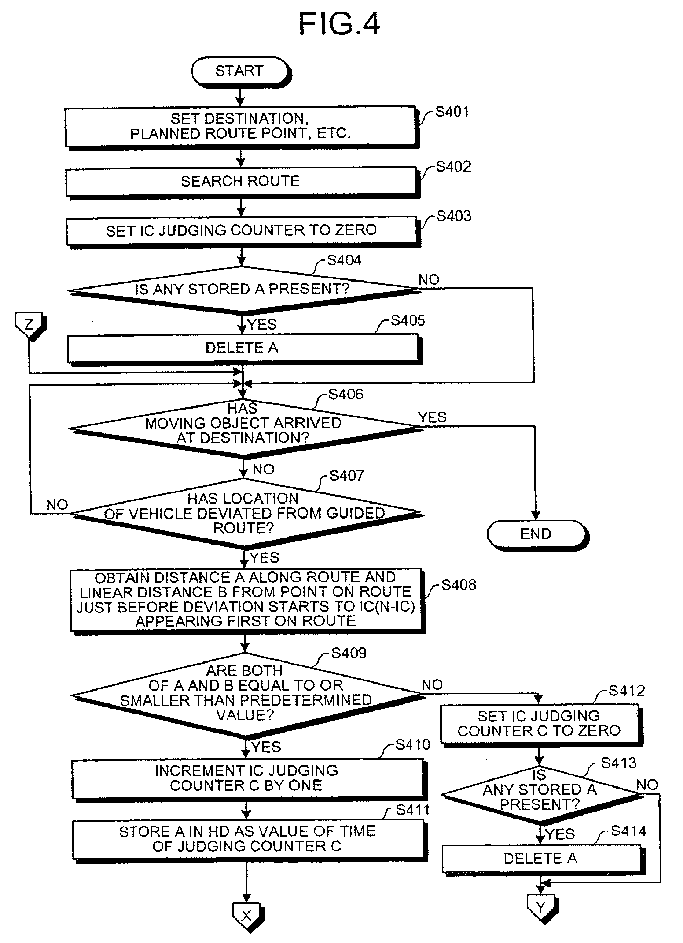

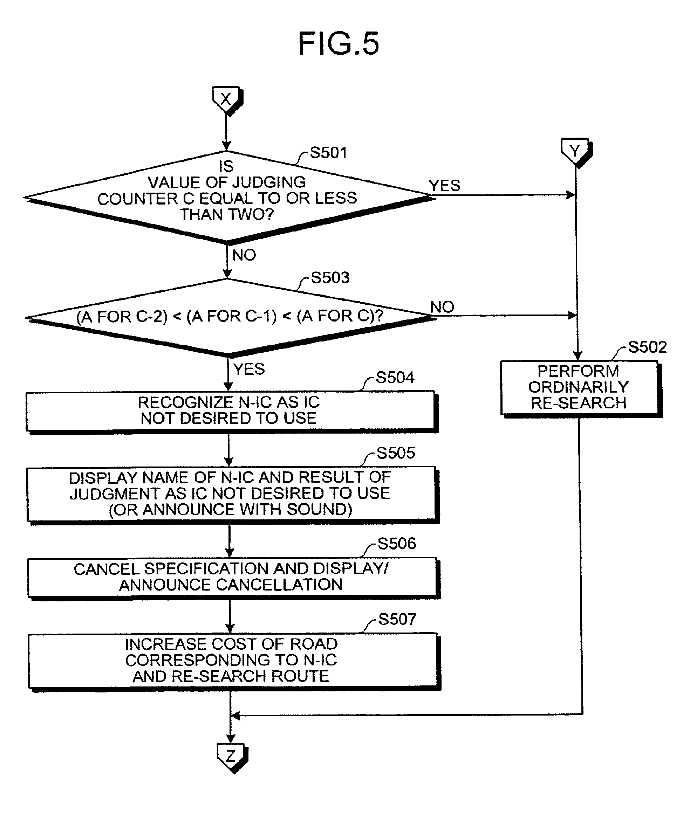

A procedure of processes by a navigation apparatus will be explained next. Fig. 4 and Fig. 5 are flowcharts showing an example of a procedure of processes by a navigation apparatus

As shown in the flowchart of Fig. 4, the destination, planned route points, etc., are set by an instruction of a user (step S401). Based on that, a route is searched (step S402), and an interchange (IC) judging counter C is set to zero (step S403). Whether any stored A is present is determined (step S404) and, when the stored A is present (step S404: YES), the A is deleted (step S405). When any stored "A" is not present (step S404: NO), nothing is done and the procedure proceeds to step S406.

Thereafter, whether the moving object has arrived at the destination is determined (step S406). When the moving object has arrived at the destination (step S406: YES), the series of processes are ended. When the moving object has not arrived at the destination yet (step S406: NO), whether the location of the moving object is deviated from the guided route is determined (step S407). When the moving object has not deviated from the guided route (step S407: NO), the procedure returns to step S406 and steps at steps S406 and S407 are repeated.

At step S407, when the location of the moving object is determined to be deviated from the guided route (step S407: YES), a distance A along the route and a linear distance B respectively from the location on the route just before the moving object has started to deviate, to an IC that appears first on the route (hereinafter, "N-IC") are obtained (step S408). Then, whether both of the obtained A and B are equal to or smaller than a predetermined value, for example, 5 km is determined (step S409).

When both A and B are determined to be equal to or smaller than the predetermined value at step S409 (step 409: YES), the IC judging counter C is incremented by one (step S410). Then, A is stored in the HD as a value at the time of a state of the IC judging counter C (step S411). The procedure proceeds to step S501 shown in Fig. 5 and ordinary re-search is executed.

On the other hand, when either A or B is determined to be larger than the predetermined value at step S409 (step S409: NO), the IC judging counter is set to zero (step S412). Then, whether any stored A is present is determined (step S413), and when a stored A is present (step S413: YES), the A is deleted (step S414), and the procedure proceeds to step S502 shown in Fig. 5. When any stored A is not present (step S413: NO), nothing is done and the procedure proceeds to step S502 shown in Fig. 5.

At step S501 in the flowchart shown in Fig. 5, whether a value of the IC judging counter C is two or less is judged (step S501), and when the count is two or less (step S501: YES), the procedure proceeds to step S502. When the value of the IC judging counter C is not two or less, that is, three (step S501: NO), a value of the IC judging counter C at judgment at the time before last (A at time C-2), a value of the IC judging counter C at last judgment (A at time C-1), and the value of the IC judging counter C judged this time (A at this time C) are compared with each other, and it is determined whether (A at time C-2)<(A at time C-1)<(A at time C), that is, whether A is increasing (step S503).

At step S503, when the A is determined not to be increasing (step S503: NO), the procedure proceeds to step S502 and ordinary re-search is executed. When A is increasing (step S503: YES), the N-IC is recognized as an IC that is not desired to use (step S504).

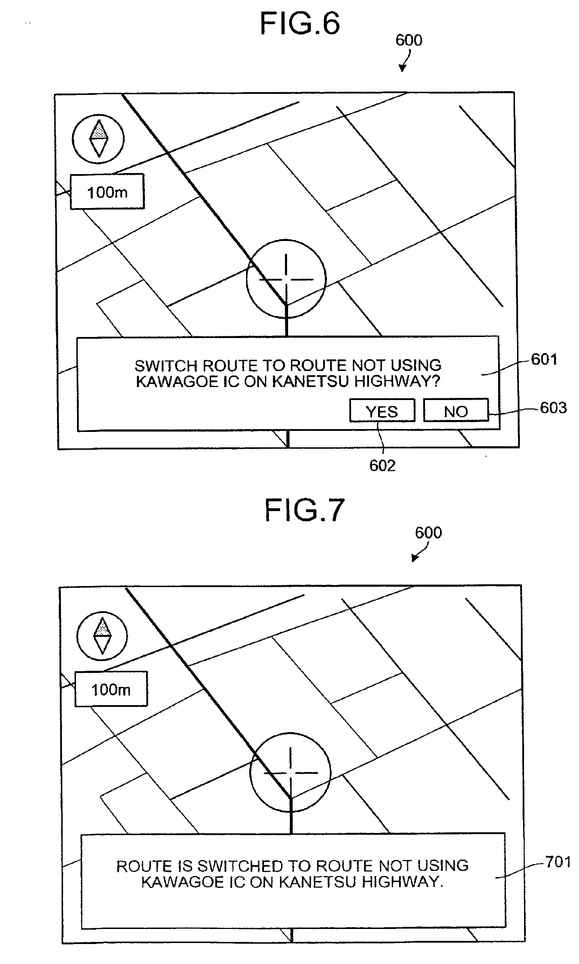

At step S504, before recognizing the N-IC as an IC that is not desired to use, for example, a popup screen 601 that may be displayed on a display screen 600 shown in Fig. 6 to confirm whether the user really does not desire to use the N-IC may be displayed. Fig. 6 is an explanatory view showing an example of a display screen of the navigation apparatus according to an example of the present invention. As shown in Fig. 6, the popup screen 601 is displayed on the display screen 600. On the popup screen 601, in addition to the name of the N-IC (in the example shown in Fig. 6, "Kawagoe IC"), a YES button 602 and a NO button 603 to input the instruction information of the user to presentation of confirmation presented on the popup screen 601 are displayed.

Then, along with presentation of the name of the N-IC, an intention that this N-IC has been determined to be an IC that is not desired to use is presented by displaying, or by announcing with sound (step S505). Fig. 7 is an explanatory view showing another example of the display screen of the navigation apparatus according to an example of the present invention. On the display screen 600 shown in Fig. 7, the intention that the N-IC has been judged to be an IC that is not desired to use can be displayed along with the name of the N-IC by displaying a popup screen 701 showing "the route is switched to a route not using Kawagoe IC on Kanetsu Highway". The popup screen 701 shown in Fig. 7 is not necessarily displayed when the popup screen 601 shown in Fig. 6 has been displayed and the intention of the user (instruction information) has been confirmed.

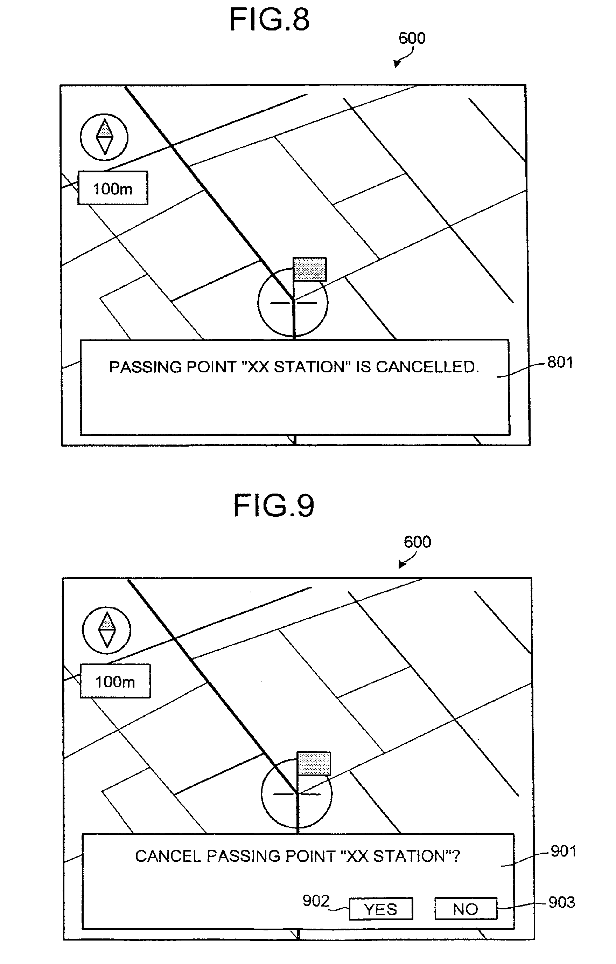

Referring back to the flowchart shown in Fig. 5, at step S506, when an IC that has been specified as an IC to use (passing point) is the N-IC, the specification is canceled and the cancellation is displayed or is announced with sound (step S506). Fig. 8 and Fig. 9 are explanatory views showing another example of the display screen of the navigation apparatus according to the example of the present invention. A display indicating that the specification of the passing point has been canceled can be displayed by displaying a popup screen 801 showing a message "the passing point 'XX Station' has been canceled" on the display screen 600 shown in Fig. 8.

On the display screen 600 shown in Fig. 9, a message "cancel the passing point 'XX Station'?", and a "YES" button 902 and a "NO" button 903 to input the instruction information of the user for presentation of confirmation are displayed. The specification of the IC to use may be canceled after confirming the intention of the user (instruction information) by displaying this popup screen 901.

In this manner, the specified IC can be canceled by keeping on running ignoring the specified IC even without canceling the specification when the user changes his/her mind on the way to the IC and desires to use another IC that is different from the IC that the user has specified to use. For example, when the user has first planned to pick up Mr. A at XX station, and then to go to YY department store, but the user receives a call from Mr. A telling the user that Mr. A will go directly to YY department store, and the user no longer have to go to XX Station, the specification to visit XX station is required to be canceled manually in a conventional technique. However, according to the embodiment, just by running the car toward YY department store, it can be recognized that XX station is avoided and the route can be re-searched after displaying the display screen shown in Fig. 8 or after confirming whether to visit XX station with the display screen shown in Fig. 9.

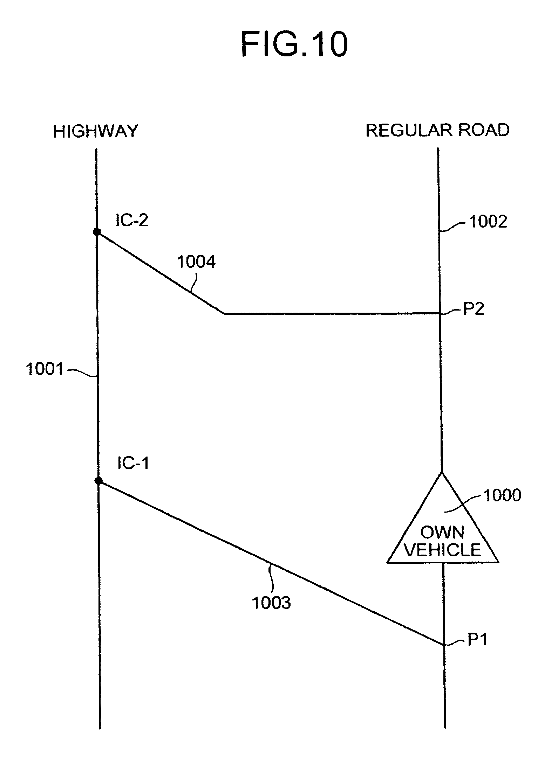

Referring back to the flowchart shown in Fig. 5, at step 507, the cost of a road corresponding to the N-IC is increased, thereby making the road hard to be taken, and then, the route is re-searched. Fig. 10 is an explanatory view showing a schematic of the routes in an example of the present invention. In Fig. 10, 1000 denotes an own vehicle, and the own vehicle 1000 is currently running on a regular road 1002 and is passing through an intersection P1. After the specification of IC-1 is canceled as an IC not desired to use, the cost of a route 1003 is increased such that the route 1003 that is a ramp to IC-1 is made hard to be taken. Specifically, for example, the length of the route 1003 is made equivalent to several tens of kilometers although the distance of the route 1003 is actually 500 m.

By doing so, when the route is re-searched as of this point, without causing the apparatus to re-search a route from the intersection P1 through the route 1003 to IC-1, the apparatus can be caused to re-search another route, for example, from a point of intersection P2 through a route 1004 to a highway 1001 entering from IC-2.

### (Process for Route Including Plural Planned Route Points)

According to the embodiment of the invention, when a guided route includes plural planned route points, for example, when the guided route includes the first planned route point to be guided first and the second planned route point to be guided following the first planned route point, the first distance that is the distance from the deviated point from the guided route to the first planned route point, and the second distance that is the linear distance from the deviated point to the second planned route point are calculated, and whether to pass the first planned route point is determined based on the history of the first distance and the history of the second distance that have been calculated. In this case, although the first distance may be either the distance along the route or the linear distance, the second distance must only be the linear distance to be used for the determination.

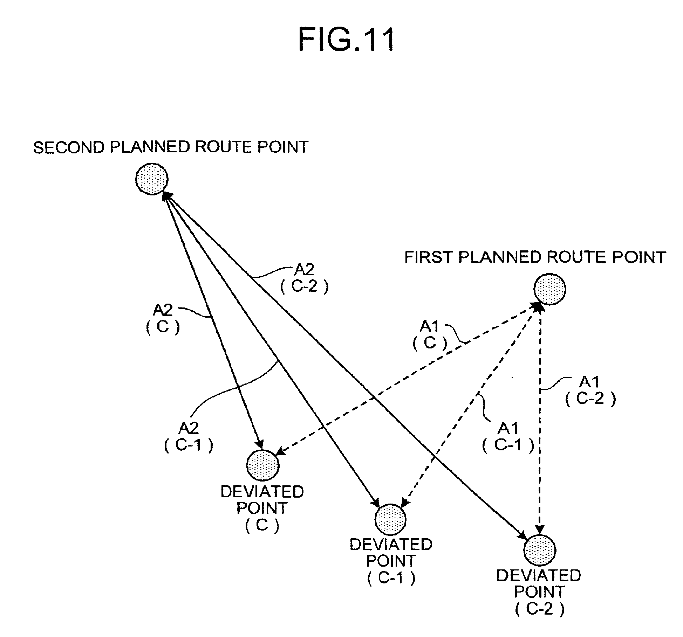

Fig. 11 is an explanatory view showing a relation of deviated points with planned route points in the embodiment of the present invention. As shown in Fig. 11, if a distance A1 to the first planned route point is the increasing trend, that is, (A1 at C-2)<(A1 at C-1)<(A1 at C), and a distance A2 to the second planned route point is the decreasing trend, that is, (A2 at C-2)>(A2 at C-1) > (A2 at C), while the deviated point shifts as C-2→C-1→C, the first planned route point is determined not to be passed. A guiding route not passing the first planned route point but passing the second planned route point is re-searched. In this manner, re-search for a route is executed determining that the user is heading for the second planned route point based on a fact that the moving object is getting away from the first planned route point and is approaching to the second planned route point.

Although A1 may be either the linear distance or the distance along the route, A2 must only be the linear distance. That is because the distance along the route to the second planned route point is a distance from the deviated point to the second planned route point through the first planned route point; therefore, A2 is obtained as (distance along the route A1)+(distance along the route from the first planned route point to the second planned route point) as the distance along the route. Thus, A2 also increases when A1 increases, and it becomes impossible to tell whether the vehicle is heading for the second planned route point.

The above processes will be described using the flowchart shown in Fig. 4 and Fig. 5 as below. First, at step S408 of the flowchart shown in Fig. 4, the distance A1 from the deviated point to the first planned route point and the linear distance A2 from the deviated point to the second planned route point are calculated. At step S411, A1 and A2 are stored in an HD correlating A1 and A2 respectively with values of C.

At step S503 of the flowchart shown in Fig. 5, whether (A1 at C-2)<(A1 at C-1)<(A1 at C) and (A2 at C-2)>(A2 at C-1)>(A2 at C), that is, whether A1 is increasing and A2 is decreasing is determined. When A1 is increasing and A2 is decreasing (step S503: YES), the procedure proceeds to step S504. When A1 is decreasing or A2 is increasing (step S503: NO), the procedure shifts to step S502.

Moreover, in an example that is not an embodiment of the invention, when the route includes plural planned route points, the apparatus may be configured to calculate only the distance from the deviated point to the planned route point to be guided first without
executing the above steps, and when it is determined that the planned route point to be guided first is not to be passed, a guided route passing the planned route point to be guided next is re-searched.

While in the above example, a case of a car navigation apparatus has been described, the present invention is not limited to the car navigation apparatus, and can be applied to, for example, a navigation apparatus for a walker mounted on a portable information processing terminal such as a mobile phone, and a route presenting application on a website, etc.

As described above, the deviation judging unit 101 judges whether the moving object has deviated from the guided route to the destination; the distance calculating unit 102 calculates the distance from the deviated point to the planned route point when the moving object is judged by the deviation judging unit 101 to have deviated from the guided route before passing the planned route point that is present on the guided route; the route judging unit 103 judges whether the planned route point is to be passed based on the history of distance calculated by the distance calculating unit 102; and the re-searching unit 104 re-searches a guiding route based on a result of judgment by the route judging unit 103. Therefore, when the current location is deviated from the guided route, re-search for a route is executed, and when the re-search is executed for a predetermined number of times, distance from each of the locations at which the re-search is executed to the planned route point is respectively calculated. Based on a result of calculation, it is determined that the user does not desire to pass the point

Thus, even if an IC to be used on a recommended route searched is different from the IC that the user actually desires to use, the probability that the route becomes a desirable route increases just by running toward the IC that the user desires to use while deviating from the guided route, without selecting an IC from the list. Therefore, the frequency of re-search and the load on the user can be reduced. Even when the user changes his/her mind on the way to the IC and desires to use another IC that is different from the IC that the user has specified to use, the specification can be canceled without performing cancellation operation for the specification, just by running, ignoring the specified IC.

Moreover, because the route judging unit 103 judges that the planned route point is to be passed when the distance from the deviated point to the planned route point is larger than a predetermined value, this is applied only to the case where the distance to the planned route point is getting smaller, and only when the distance to the planned route point is the increasing trend although the user has come close to the point, it can be determined that the point is not desired to be passed.

Furthermore, when the planned route point is determined not to be passed by the route judging unit 103, the presenting unit 105 presents accordingly. Therefore, a route passing the point is not canceled against the intention of the user.

Moreover, when the planned route point is determined not to be passed by the route judging unit 103, the presenting unit 105 presents the confirmation whether to pass the planned route point; the acquiring unit 106 acquires the instruction information in response to the presentation of the confirmation; and the re-searching unit 104 re-searches a guiding route based on the instruction information. Therefore, the route point can be properly canceled. Therefore, the user does not have to operate the navigation apparatus to select an IC, and it is possible to cause the navigation apparatus to automatically search a route including properly selected IC just by heading the vehicle for an IC that the operator desires to use.

Furthermore, according to the embodiment of the invention, when the moving object is judged, by the deviation judging unit 101, to be deviated from the guided route before transiting the first planned route point to be guided first, the distance calculating unit 102 calculates the first distance that is the distance from the deviated point to the first planned route point and the second distance that is the linear distance from the deviated point to the second planned route point to be guided following the first planned route point; and the route judging unit 103 judges whether the first planned route point is to be passed based on the history of the first distance and the history of the second distance calculated by the distance calculating unit 102. For example, when the first distance is the increasing trend and the second distance is the decreasing trend, the route judging unit 103 judges that the first planned route point is not to be passed and the re-searching unit 104 re-searches a guiding route not passing the first planned route point and passing the second planned route point. Therefore, even when plural planned route points are present, some of those route points can be efficiently canceled.

Moreover, according to an example that is not an embodiment of the invention, when plural planned route points are present, the distance calculating unit 102 calculates only the distance from the deviated point to the planned route point to be guided first, and when the planned route point to be guided first is judged by the route judging unit 103 not to be passed, the re-searching unit 104 may re-search a guiding route passing a planned route point to be guided next.

The route searching method in the embodiment may be realized with a computer-readable program prepared in advance, that is readable by a computer (for example, a micro-computer) and may be realized by executing the program on the computer. This program is recorded on a computer-readable recording medium such as an HD, an FD, a CD-ROM, an MO, a DVD, etc., and is executed by being read from the recording medium by the computer. This program may be a transmission medium that can be distributed through a network such as the Internet.

## Claims

1. A navigation apparatus comprising:
a guiding unit (309) configured to guide a route to a destination;
a deviation judging unit (101) configured to judge whether a moving object (1000) has deviated from the guided route; and
a re-searching unit (104) configured to re-search a route to the destination when the deviation judging unit judges that the moving object has deviated from the guided route;
wherein, in response to the route being re-searched, the guiding unit is configured to guide the re-searched route,
**characterised in that** the navigation apparatus further comprises:
a distance calculating unit (102) configured to calculate a first distance (A1) and a second distance (A2), the first distance being a distance from a deviated point (C, C1, C2) to a first planned route point, the second distance being a linear distance from the deviated point to a second planned route point, when the deviation judging unit judges that the moving object has deviated from the guided route before passing the first planned route point; and
a route judging unit (103) configured to judge that the first planned route point is not to be passed when a first distance history in the form of a plurality of the first distances, calculated when the deviation judging unit has judged that the moving object has deviated from the guided route before the moving object reaches the first planned route point, shows that the first distance is an increasing trend and a second distance history in the form of a plurality of the second distances, calculated when the deviation judging unit has judged that the moving object has deviated from the guided route before the moving object reaches the first planned route point, shows that the second distance is a decreasing trend;
wherein the re-searching unit is configured to re-search a route passing the second planned route point without passing the first planned route point when the route judging unit judges that the first planned route point is not to be passed.

2. The navigation apparatus according to claim 1, further comprising a presenting unit (105) configured to present, when the route judging unit (103) judges that the first planned route point is not to be passed, that the first planned route point is not to be passed.

3. The navigation apparatus according to claim 1, further comprising:
a presenting unit (105) configured to present a content to confirm whether to pass the first planned route point when the route judging unit (103) judges that the first planned route point is not to be passed; and
an acquiring unit (106) configured to acquire information indicative of an instruction in response to the confirmation, wherein
the re-searching unit (104) is configured to re-search a route based on the instruction.

4. The navigation apparatus according to claim 1, wherein the route judging unit (103) is configured to judge that the first planned route point is to be passed when the first distance is larger than a threshold.

5. A route searching method comprising the steps of:
guiding a route to a destination;
judging (S202) whether a moving object has deviated from the guided route; and
re-searching (S206) a route to the destination when it is judged that the moving object has deviated from the guided route;
**characterized by** further comprising the steps of:
calculating (S204) a first distance (A1) and a second distance (A2), the first distance being a distance from a deviated point (C, C1, C2) to a first planned route point, the second distance being a linear distance from the deviated point to a second planned route point, when the deviation judging step judges that the moving object has deviated from the guided route before passing the first planned route point; and
judging (S504) that the first planned route point is not to be passed when a first distance history in the form of a plurality of the first distances, calculated when the deviation judging step has judged that the moving object has deviated from the guided route before the moving object reaches the first planned route point, shows (S503) that the first distance is an increasing trend and a second distance history in the form of a plurality of the second distances, calculated when the deviation judging step has judged that the moving object has deviated from the guided route before the moving object reaches the first planned route point, shows that the second distance is a decreasing trend;
wherein the re-searching step re-searches a route passing the second planned route point without passing the first planned route point (S507) when it is judged that the first planned route point is not to be passed.

6. The route searching method according to claim 5, further comprising presenting (S505), when the deviation judging step (5202, S407) judges that the first planned route point is not to be passed, that the first planned route point is not to be passed.

7. The route searching unit according to claim 5, further comprising:
presenting (S505) a content to confirm whether to pass the planned route point when the deviation judging step (S202, S407) judges that the first planned route point is not to be passed; and
acquiring information indicative of an instruction in response to the confirmation, wherein
the re-searching step (S206) includes re-searching a route based on the instruction.

8. The route searching method according to claim 5,
wherein the deviation judging step (S202) includes judging (S409) that the first planned route point is to be passed when the first distance (A1) is larger than a threshold.

9. A computer-readable recording medium that stores therein a route searching program making a computer (300) perform the method of any one of claims 5 to 8.

## Patentansprüche

1. Navigationsvorrichtung, die Folgendes umfasst:
eine Führungseinheit (309), die dazu ausgebildet ist, eine Strecke zu einem Ziel zu führen;
eine Abweichungsbeurteilungseinheit (101), die dazu ausgebildet ist, zu beurteilen, ob ein bewegtes Objekt (1000) von der geführten Strecke abgewichen ist; und
eine Neusucheinheit (104), die dazu ausgebildet ist, eine Strecke zu dem Ziel neu zu suchen, wenn die Abweichungsbeurteilungseinheit urteilt, dass das bewegte Objekt von der geführten Strecke abgewichen ist;
wobei, als Reaktion darauf, dass die Strecke neu gesucht wird, die Führungseinheit dazu ausgebildet wird, die neu gesuchte Strecke zu führen,
**dadurch gekennzeichnet, dass** die Navigationsvorrichtung weiter Folgendes umfasst:
eine Entfernungsberechnungseinheit (102), die dazu ausgebildet ist, eine erste Entfernung (A1) und eine zweite Entfernung (A2) zu berechnen, wobei es sich bei der ersten Entfernung um eine Entfernung von einem abgewichenen Punkt (C, C1, C2) zu einem ersten geplanten Streckenpunkt handelt, wobei es sich bei der zweiten Entfernung um eine lineare Entfernung vom abgewichenen Punkt zu einem zweiten geplanten Streckenpunkt handelt, wenn die Abweichungsbeurteilungseinheit urteilt, dass das bewegte Objekt von der geführten Strecke abgewichen ist, bevor es den ersten geplanten Streckenpunkt passiert; und
eine Streckenbeurteilungseinheit (103), die dazu ausgebildet ist, zu urteilen, dass der erste geplante Streckenpunkt nicht passiert werden soll, wenn eine erste Entfernungshistorie in Form mehrerer der ersten Entfernungen, die berechnet werden, wenn die Abweichungsbeurteilungseinheit geurteilt hat, dass das bewegte Objekt von der geführten Strecke abgewichen ist, bevor das bewegte Objekt den ersten geplanten Streckenpunkt erreicht, zeigt, dass es sich bei der ersten Entfernung um eine zunehmende Tendenz handelt und eine zweite Entfernungshistorie in Form mehrerer der zweiten Entfernungen, die berechnet werden, wenn die Abweichungsbeurteilungseinheit geurteilt hat, dass das bewegte Objekt von der geführten Strecke abgewichen ist, bevor das bewegte Objekt den ersten geplanten Streckenpunkt erreicht, zeigt, dass es sich bei der zweiten Entfernung um eine abnehmende Tendenz handelt;
wobei die Neusucheinheit dazu ausgebildet ist, eine Strecke neu zu suchen, die den zweiten geplanten Streckenpunkt passiert, ohne den ersten geplanten Streckenpunkt zu passieren, wenn die Streckenbeurteilungseinheit urteilt, dass der erste geplante Streckenpunkt nicht passiert werden soll.

2. Navigationsvorrichtung nach Anspruch 1, weiter umfassend eine Darstellungseinheit (105), die dazu ausgebildet ist, wenn die Streckenbeurteilungseinheit (103) urteilt, dass der erste geplante Streckenpunkt nicht passiert werden soll, darzustellen, dass der erste geplante Streckenpunkt nicht passiert werden soll.

3. Navigationsvorrichtung nach Anspruch 1, die weiter Folgendes umfasst:
eine Darstellungseinheit (105), die dazu ausgebildet ist, einen Inhalt darzustellen, um zu bestätigen, ob der erste geplante Streckenpunkt passiert werden soll, wenn die Streckenbeurteilungseinheit (103) urteilt, dass der erste geplante Streckenpunkt nicht passiert werden soll; und
eine Erfassungseinheit (106), die dazu ausgebildet ist, als Reaktion auf die Bestätigung Informationen zu erfassen, die für eine Anweisung indikativ sind, wobei
die Neusucheinheit (104) dazu ausgebildet ist, basierend auf der Anweisung eine Strecke neu zu suchen.

4. Navigationsvorrichtung nach Anspruch 1, wobei die Streckenbeurteilungseinheit (103) dazu ausgebildet ist, zu urteilen, das der erste geplante Streckenpunkt passiert werden soll, wenn die erste Entfernung größer ist als ein Schwellenwert.

5. Streckensuchverfahren, das folgende Schritte umfasst:
Führen einer Strecke zu einem Ziel;
Beurteilen (S202), ob ein bewegtes Objekt von der geführten Strecke abgewichen ist; und
neues Suchen (S206) einer Strecke zu dem Ziel, wenn geurteilt wird, dass das bewegte Objekt von der geführten Strecke abgewichen ist;
**dadurch gekennzeichnet, dass** es weiter folgende Schritte umfasst:
Berechnen (S204) einer ersten Entfernung (A1) und einer zweiten Entfernung (A2), wobei es sich bei der ersten Entfernung um eine Entfernung von einem abgewichenen Punkt (C, C1, C2) zu einem ersten geplanten Streckenpunkt handelt, wobei es sich bei der zweiten Entfernung um eine lineare Entfernung vom abgewichenen Punkt zu einem zweiten geplanten Streckenpunkt handelt, wenn der Abweichungsbeurteilungsschritt urteilt, dass das bewegte Objekt von der geführten Strecke abgewichen ist, bevor es den ersten geplanten Streckenpunkt passiert; und
Urteilen (S504), dass der erste geplante Streckenpunkt nicht passiert werden soll, wenn eine erste Entfernungshistorie in Form mehrerer der ersten Entfernungen, die berechnet werden, wenn der Abweichungsbeurteilungsschritt geurteilt hat, dass das bewegte Objekt von der geführten Strecke abgewichen ist, bevor das bewegte Objekt den ersten geplanten Streckenpunkt erreicht, zeigt (S503), dass es sich bei der ersten Entfernung um eine zunehmende Tendenz handelt und eine zweite Entfernungshistorie in Form mehrerer der zweiten Entfernungen, die berechnet werden, wenn der Abweichungsbeurteilungsschritt geurteilt hat, dass das bewegte Objekt von der geführten Strecke abgewichen ist, bevor das bewegte Objekt den ersten geplanten Streckenpunkt erreicht, zeigt, dass es sich bei der zweiten Entfernung um eine abnehmende Tendenz handelt;
wobei der Neusuchschritt eine Strecke neu sucht, die den zweiten geplanten Streckenpunkt passiert, ohne den ersten geplanten Streckenpunkt zu passierten (S507), wenn geurteilt wird, dass der erste geplante Streckenpunkt nicht passiert werden soll.

6. Streckensuchverfahren nach Anspruch 5, weiter umfassend das Darstellen (S505), wenn der Abweichungsbeurteilungsschritt (S202, S407) urteilt, dass der erste geplante Streckenpunkt nicht passiert werden soll, dass der erste geplante Streckenpunkt nicht passiert werden soll.

7. Streckensucheinheit nach Anspruch 5, die weiter Folgendes umfasst:
Darstellen (S505) eines Inhalts, um zu bestätigen, ob der geplante Streckenpunkt passiert werden soll, wenn der Abweichungsbeurteilungsschritt (S202, S407) urteilt, dass der erste geplante Streckenpunkt nicht passiert werden soll; und
Erfassen von für eine Anweisung indikativen Informationen als Reaktion auf die Bestätigung, wobei
der Neusuchschritt (S206) das neue Suchen einer Strecke basierend auf der Anweisung umfasst.

8. Streckensuchverfahren nach Anspruch 5,
wobei der Abweichungsbeurteilungsschritt (S202) das Urteilen (S409), dass der erste geplante Streckenpunkt passiert werden soll, wenn die erste Entfernung (A1) größer ist als ein Schwellenwert, umfasst.

9. Computerlesbares Aufzeichnungsmedium, das ein Streckensuchprogramm darin speichert, das einen Computer (300) veranlasst, das Verfahren nach einem der Ansprüche 5 bis 8 auszuführen.

## Revendications

1. Appareil de navigation comportant :
une unité de guidage (309) configurée pour guider un itinéraire jusqu'à une destination ;
une unité d'estimation d'écart (101) configurée pour estimer si un objet mobile (1000) s'est écarté ou non de l'itinéraire de guidage ; et
une unité de nouvelle recherche (104) configurée pour rechercher à nouveau un itinéraire jusqu'à la destination quand l'unité d'estimation d'écart estime que l'objet mobile s'est écarté de l'itinéraire de guidage ;
dans lequel, en réponse à l'itinéraire faisant l'objet d'une nouvelle recherche, l'unité de guidage est configurée pour guider l'itinéraire nouvellement recherché,
**caractérisé en ce que** l'appareil de navigation comporte par ailleurs :
une unité de calcul de distance (102) configurée pour calculer une première distance (A1) et une seconde distance (A2), la première distance étant une distance depuis un point d'écart (C, C1, C2) jusqu'à un premier point d'itinéraire planifié, la seconde distance étant une distance linéaire depuis le point d'écart jusqu'à un second point d'itinéraire planifié, quand l'unité d'estimation d'écart estime que l'objet mobile s'est écarté de l'itinéraire de guidage avant de franchir le premier point d'itinéraire planifié ; et
une unité d'estimation d'itinéraire (103) configurée pour estimer que le premier point d'itinéraire planifié ne doit pas être franchi quand un historique de la première distance sous la forme d'une pluralité des premières distances, que l'on calcule quand l'unité d'estimation d'écart a estimé que l'objet mobile s'est écarté de l'itinéraire de guidage avant que l'objet mobile n'atteigne le premier point d'itinéraire planifié, indique que la première distance est une tendance croissante et un historique de la seconde distance sous la forme d'une pluralité des secondes distances, que l'on calcule quand l'unité d'estimation d'écart a estimé que l'objet mobile s'est écarté de l'itinéraire de guidage avant que l'objet mobile n'atteigne le premier point d'itinéraire planifié, indique que la seconde distance est une tendance décroissante ;
dans lequel l'unité de nouvelle recherche est configurée pour rechercher à nouveau un itinéraire franchissant le second point d'itinéraire planifié sans franchir le premier point d'itinéraire planifié quand l'unité d'estimation d'itinéraire estime que le premier point d'itinéraire planifié ne doit pas être franchi.

2. Appareil de navigation selon la revendication 1, comportant par ailleurs une unité de présentation (105) configurée pour présenter, quand l'unité d'estimation d'itinéraire (103) estime que le premier point d'itinéraire planifié ne doit pas être franchi, que le premier point d'itinéraire planifié ne doit pas être franchi.

3. Appareil de navigation selon la revendication 1, comportant par ailleurs :
une unité de présentation (105) configurée pour présenter un contenu pour confirmer s'il faut franchir le premier point d'itinéraire planifié quand l'unité d'estimation d'itinéraire (103) estime que le premier point d'itinéraire planifié ne doit pas être franchi ; et
une unité d'acquisition (106) configurée pour acquérir des informations indiquant une instruction en réponse à la confirmation, dans lequel
l'unité de nouvelle recherche (104) est configurée pour rechercher à nouveau un itinéraire en fonction de l'instruction.

4. Appareil de navigation selon la revendication 1, dans lequel l'unité d'estimation d'itinéraire (103) est configurée pour estimer que le premier point d'itinéraire planifié doit être franchi quand la première distance est supérieure à un seuil.

5. Procédé de recherche d'itinéraire comportant les étapes consistant à :
guider un itinéraire jusqu'à une destination ;
estimer (S202) si un objet mobile s'est écarté ou non de l'itinéraire de guidage ; et
rechercher à nouveau (S206) un itinéraire jusqu'à la destination quand il est estimé que l'objet mobile s'est écarté de l'itinéraire de guidage ;
**caractérisé en ce qu'**il comporte par ailleurs les étapes consistant à :
calculer (S204) une première distance (A1) et une seconde distance (A2), la première distance étant une distance depuis un point d'écart (C, C1, C2) jusqu'à un premier point d'itinéraire planifié, la seconde distance étant une distance linéaire depuis le point d'écart jusqu'à un second point d'itinéraire planifié, quand l'étape consistant à estimer l'écart estime que l'objet mobile s'est écarté de l'itinéraire de guidage avant de franchir le premier point d'itinéraire planifié ; et
estimer (S504) que le premier point d'itinéraire planifié ne doit pas être franchi quand un historique de la première distance sous la forme d'une pluralité des premières distances, que l'on calcule quand l'étape consistant à estimer l'écart a estimé que l'objet mobile s'est écarté de l'itinéraire de guidage avant que l'objet mobile n'atteigne le premier point d'itinéraire planifié, indique (S503) que la première distance est une tendance croissante et un historique de la seconde distance sous la forme d'une pluralité des secondes distances, que l'on calcule quand l'étape consistant à estimer l'écart a estimé que l'objet mobile s'est écarté de l'itinéraire de guidage avant que l'objet mobile n'atteigne le premier point d'itinéraire planifié, indique que la seconde distance est une tendance décroissante ;
dans lequel l'étape consistant à rechercher à nouveau recherche à nouveau un itinéraire franchissant le second point d'itinéraire planifié sans franchir le premier point d'itinéraire planifié (S507) quand il est estimé que le premier point d'itinéraire planifié ne doit pas être franchi.

6. Procédé de recherche d'itinéraire selon la revendication 5, comportant par ailleurs présenter (S505), quand l'étape consistant à estimer l'écart (S202, S407) estime que le premier point d'itinéraire planifié ne doit pas être franchi, que le premier point d'itinéraire planifié ne doit pas être franchi.

7. Procédé de recherche d'itinéraire selon la revendication 5, comportant par ailleurs :
présenter (S505) un contenu pour confirmer s'il faut franchir le point d'itinéraire planifié quand l'étape consistant à estimer l'écart (S202, S407) estime que le premier point d'itinéraire planifié ne doit pas être franchi ; et
acquérir des informations indiquant une instruction en réponse à la confirmation, dans lequel
l'étape consistant à rechercher à nouveau (S206) comprend rechercher à nouveau un itinéraire en fonction de l'instruction.

8. Procédé de recherche d'itinéraire selon la revendication 5,
dans lequel l'étape consistant à estimer l'écart (S202) comprend estimer (S409) que le premier point d'itinéraire planifié doit être franchi quand la première distance (A1) est supérieure à un seuil.

9. Support d'enregistrement lisible par ordinateur qui stocke dans celui-ci un programme de recherche d'itinéraire permettant à un ordinateur (300) d'exécuter le procédé selon l'une quelconque des revendications 5 à 8.
